# FASCICULE DE BREVET EUROPEEN

(11) **EP 1 577 176 B1**
(45) Date de publication et mention de la délivrance du brevet: **10.09.2008**
(21) Numéro de dépôt: 05300137.6
(22) Date de dépôt: 22.02.2005
(51) Int. Cl.: B60R 22/02

(54) **Dispositif de rangement d'une ceinture de sécurité**
Halter für Sicherheitsgurt
Device for storing a seat belt

(30) Priorité: 02.03.2004 FR 0450415
(43) Date de publication de la demande: 21.09.2005
(73) Titulaire: RENAULT S.A.S., 92100 Boulogne Billancourt (FR)
(72) Inventeur: Laurie, John, 78000 Versailles (FR)

(56) Documents cités:
- EP-A- 0 494 009
- EP-A- 0 769 432
- EP-A- 1 136 331
- US-A1- 2003 173 767

## Description

L'invention concerne un dispositif de rangement d'une ceinture de sécurité d'un siège arrière central de véhicule automobile, qui comporte au moins une ceinture, au moins un pêne, un enrouleur et un moyen d'ancrage de renvoi de ceinture.

Pour assurer la sécurité du passager arrière central d'un véhicule automobile, une ceinture à 3 points est utilisée. La publication US2003173767 décrit un dispositif spécialement conçu pour retenir les deux pênes sous la forme d'un boîtier muni de moyens de retenue de chaque pêne. Cette installation particulière est complexe et engendre des coûts aussi bien sur le montage que sur les pièces utilisées. De plus, le montage de la garniture de pavillon peut engendrer des défauts d'alignement de cette dernière ce qui nécessite une ouverture suffisamment large pour prévoir les dispersions de tolérances. Ensuite pour obtenir une bonne finition, le boîtier doit comporter des bords suffisamment larges.

Afin de pallier ces inconvénients, l'invention a pour objet un moyen de retenue du pêne de la ceinture de sécurité pouvant s'affranchir des défauts d'alignement de la garniture de pavillon.

L'invention a également pour objet d'améliorer l'aménagement du véhicule pour réduire le nombre de pièces, optimisant ainsi le montage.

A cet effet, l'invention propose un dispositif de rangement d'une ceinture de sécurité du type cité ci-dessus caractérisé en ce que le dispositif de rangement est constitué par un dispositif de centrage de la garniture au pavillon.

Selon d'autres caractéristiques de l'invention le dispositif de rangement comporte un aimant inséré au niveau de l'embase.

Selon d'autres caractéristiques de l'invention, l'aimant a une position d'inclinaison selon un angle α entre le plan formé par la face d'appui de l'aimant et le plan formé par la face d'appui de l'embase.

Selon d'autres caractéristiques de l'invention, le dispositif comporte un détrompeur sur l'un de ses moyens de retenue.

Selon d'autres caractéristiques de l'invention, le montage de l'aimant consiste à l'envelopper dans un cylindre, à insérer le cylindre dans la partie centrale du corps et de l'embase, à souder les rebords circulaires du cylindre à la face externe de l'embase.

D'autres caractéristiques et avantages de l'invention ressortiront plus clairement de la description qui va suivre d'un mode de réalisation donné à titre d'exemple non limitatif et représenté aux figures annexées suivantes.
La figure 1 représente une vue en coupe transversale du dispositif de rangement de ceinture.
La figure 2 est une vue en coupe longitudinale du dispositif de rangement de ceinture.
La figure 3 représente une vue en coupe transversale du dispositif de rangement de ceinture placé au niveau de la garniture du pavillon quand la ceinture est en position de rangement.

Les éléments constitutifs de la ceinture étant connus en soit ne seront pas décrits en détail dans la description qui suit.

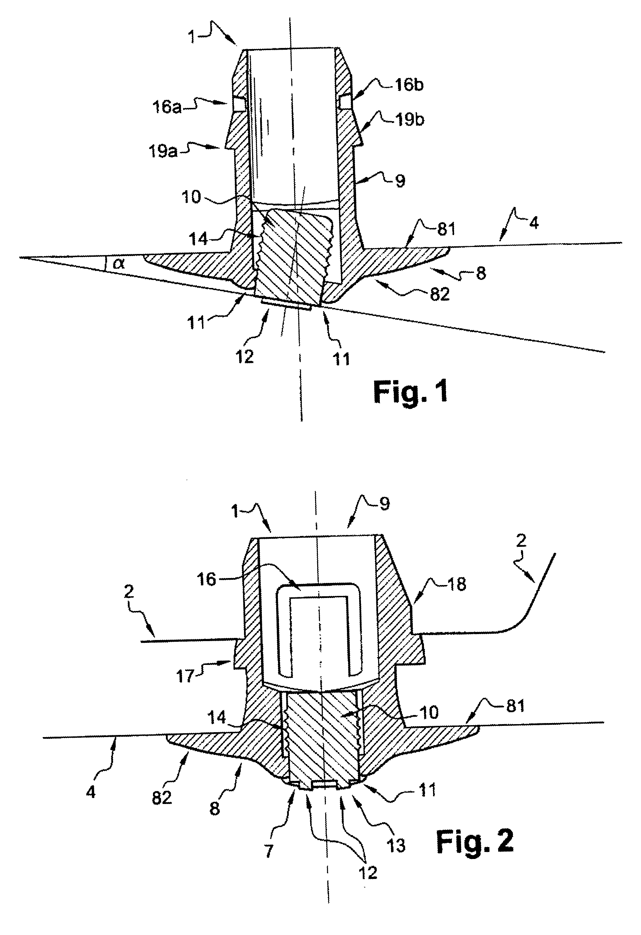

Tel que représenté sur la figure 1, le dispositif 1 comprend une embase 8 et un corps 9. Le dispositif 1 est localisé sur la garniture 4 de pavillon 5 en arrière du siège.

L'embase 8 est apparente sur la garniture 4. L'embase 8 a sensiblement une forme de disque et comporte une face d'appui 81 destiné à être en contact avec la garniture 4 de pavillon 5 et une face externe 82 visible de l'intérieur de l'habitacle du véhicule.

Le corps 9 est d'orientation sensiblement perpendiculaire au plan formé par la face d'appui 81 de l'embase 8. Le corps 9 est positionné dans un orifice de la garniture 4 et d'un élément de structure du véhicule tel qu'une traverse arrière 2. Le corps 9 est retenu à la garniture 4 et à la traverse arrière 2 par des moyens de retenue 16,17,18. Le corps 9 a sensiblement une forme de parallélépipède rectangle.

Le corps 9 et l'embase 8 comporte un aimant 7 enveloppé dans un cylindre 10. Cet aimant 7 est inséré dans la partie centrale du corps 9 et de l'embase 8 et débouche sur la face externe 82 de l'embase 8 en formant une surface d'appui 13 pour le premier pêne 6a.

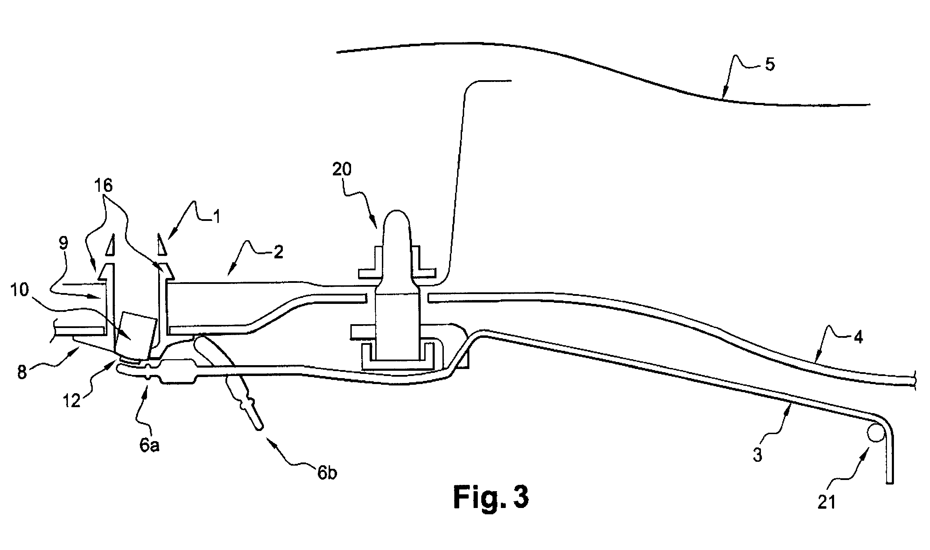

Le centre du corps 9 est évidé de façon à insérer le cylindre 10 laissant apparaître au niveau de l'embase 8 un rebord circulaire 11. Ce cylindre peut être fixé au corps au niveau de la face externe 82 de l'embase 8 par soudage à ultrasons sur le rebord circulaire 11. Ce cylindre 10 peut comporter des stries 14 horizontales sur sa surface de révolution. Le plan formé par la face d'appui de l'aimant 13 est incliné selon un angle d'inclinaison α par rapport au plan formé par la face d'appui 81 de l'embase 8. L'évidement au centre du corps 9 est dimensionné de façon à respecter l'inclinaison de l'aimant 7. Tel que représenté sur la figure 3, cette inclinaison est dirigée, dans notre exemple de mode de réalisation, vers l'enrouleur 21 de la ceinture 3 correspondante. L'aimant 7, étant formé, dans notre exemple de réalisation, d'un élément magnétique de forme parallélépipédique intercalé entre deux portions de cylindre en fer doux formant ainsi une pièce d'aspect général cylindrique. Les deux portions de cylindre étant proéminent par rapport à l'aimant sont appelées des bossages 12. Les bossages 12 permettent d'éviter la détérioration de l'aimant lors des contacts avec le premier pêne 6a. Quand la ceinture n'est pas utilisée, l'inclinaison et les bossages 12 permettent au premier pêne 6a d'être maintenu en position de rangement. De plus, l'inclinaison est choisie de telle manière qu'elle permet de laisser un espace suffisant entre la partie qui va du premier pêne 6a jusqu'au moyen d'ancrage de renvoi de ceinture 20 et la garniture 4 quand la ceinture de sécurité est en position de rangement. Cet espace permet au deuxième pêne 6b d'y être bloqué.

Tel que représenté sur les figures 1 et 2, le corps 9 est évidé et dispose sur chacune de ses faces des moyens de retenue 16a, 16b,17,18. Deux des quatre faces qui sont parallèles entre elles ont des moyens de retenue 16a,16b identiques. Chacun des moyens 16a,16b comporte une lame élastique 19a,19b rectangulaire qui se clipse permettant ainsi la fixation du dispositif 1 à la traverse arrière 2. Les deux autres faces, qui sont parallèles entre elles, ont chacune des moyens de retenue 17,18 qui leur sont propres. L'un de ces moyens 17 est une protubérance. L'autre moyen 18 est un détrompeur pourvu d'une protubérance. Le détrompeur est un bossage qui permet un repérage pour effectuer le montage facilement et sans erreur. Ainsi, lors du montage, il est facile de savoir de quelle façon monter le dispositif 1 dans la garniture 4 pour assurer la position de l'inclinaison α. Les moyens de retenue 17, 18 sont positionnés de façon à permettre la retenue sur la garniture 4.

De plus, le dispositif 1 permet le centrage de la garniture 4 au pavillon 5. Ce dispositif 1 établit simplement la juxtaposition parfaite de la garniture 4 au pavillon 5 lorsque l'on veut fixer la totalité de la garniture 4 au pavillon 5.

Dans le dispositif 1 ainsi réalisé, le rangement s'opère par suite de l'effort de traction de l'enrouleur 21 et de la pose du premier pêne 6a sur l'aimant 7 par le passager.

Lorsque le passager veut utiliser la ceinture de sécurité 3, il décroche le premier pêne 6a de l'aimant 7. Il tire alors sur la ceinture 3 au moyen du premier pêne 6a décroché. Il amène le deuxième pêne 6b dans la gâche située à droite du passager au voisinage de l'assise du siège pour verrouiller la ceinture. Il amène ensuite le premier pêne 6a dans la gâche située à gauche du passager au voisinage de l'assise du siège pour terminer le verrouillage de la ceinture 3. Le passager peut régler aisément son siège selon les différentes positions offertes.

## Revendications

1. Dispositif de rangement d'une ceinture de sécurité d'un siège arrière central de véhicule automobile, qui comporte au moins une ceinture (3), au moins un pêne (6), un enrouleur (21), un moyen d'ancrage de renvoi de ceinture (20), **caractérisé en ce que** le dispositif de rangement (1) est constitué par un dispositif de centrage de la garniture (4) au pavillon (5).

2. Dispositif de rangement d'une ceinture de sécurité selon la revendication 1 **caractérisé en ce que** le dispositif de rangement (1) comporte un aimant (7) inséré au niveau de l'embase (8).

3. Dispositif de rangement d'une ceinture de sécurité selon la revendication 2 **caractérisé en ce que** l'aimant (7) a une position d'inclinaison selon un angle α entre le plan formé par la face d'appui de l'aimant (13) et le plan formé par la face d'appui (82) de l'embase (8).

4. Dispositif de rangement d'une ceinture de sécurité selon la revendication 1 **caractérisé en ce que** le dispositif (1) comporte un détrompeur sur l'un de ses moyens de retenue (16,17,18).

5. Dispositif de rangement d'une ceinture de sécurité selon la revendication 2 ou la revendication 3 **caractérisé en ce que** le montage de l'aimant (7) consiste à l'envelopper dans un cylindre (10), à insérer le cylindre (10) dans la partie centrale du corps (9) et de l'embase (8), à souder le rebord circulaire (11) du cylindre (10) à la face externe (82) de l'embase (8).

## Claims

1. Device for storing a seat belt of a central rear seat of a motor vehicle, which comprises at least one belt (3), at least one latch (6), a belt winder (21), and a seat belt anchorage means (20), **characterized in that** the storage device (1) consists of a device for centring the lining (4) on the roof (5).

2. Seat belt storage device according to Claim 1, **characterized in that** the storage device (1) comprises a magnet (7) inserted into the footing (8).

3. Seat belt storage device according to Claim 2, **characterized in that** the magnet (7) is inclined at an angle α between the plane formed by the bearing surface (13) of the magnet and the plane formed by the bearing surface (82) of the footing (8).

4. Seat belt storage device according to Claim 1, **characterized in that** the device (1) comprises a polarizer on one of its retaining means (16, 17, 18).

5. Seat belt storage device according to Claim 2 or Claim 3, **characterized in that** the magnet (7) is fitted by encasing it in a cylinder (10), inserting the cylinder (10) into the central part of the body (9) and of the footing (8), and soldering the circular rim (11) of the cylinder (10) to the external surface (82) of the footing (8).

## Patentansprüche

1. Anordnungsvorrichtung für einen Sicherheitsgurt für einen mittleren Rücksitz eines Kraftwagens, der mindestens einen Gurt (3), mindestens einen Schließmechanismus (6), eine Aufrollvorrichtung (21) und ein Gurtrückstellverankerungsmittel (20) umfasst, **dadurch gekennzeichnet, dass** die Anordnungsvorrichtung (1) aus einer Vorrichtung zur Zentrierung der Auskleidung (4) am Dach (5) besteht.

2. Anordnungsvorrichtung für einen Sicherheitsgurt nach Anspruch 1, **dadurch gekennzeichnet, dass** die Anordnungsvorrichtung (1) einen an der Basis (8) eingeführten Magneten (7) aufweist.

3. Anordnungsvorrichtung für einen Sicherheitsgurt nach Anspruch 2, **dadurch gekennzeichnet, dass** der Magnet (7) eine Neigungsposition gemäß einem Winkel α zwischen der durch die Anlagefläche des Magneten (13) gebildeten Ebene und der durch die Anlagefläche (82) der Basis (8) gebildeten Ebene aufweist.

4. Anordnungsvorrichtung für einen Sicherheitsgurt nach Anspruch 1, **dadurch gekennzeichnet, dass** die Vorrichtung (1) eine Unverwechselbarkeitseinrichtung an einem seiner Haltemittel (16, 17, 18) enthält.

5. Anordnungsvorrichtung für einen Sicherheitsgurt nach Anspruch 2 oder 3, **dadurch gekennzeichnet, dass** die Montage des Magneten (7) in seinem Ummanteln mit einem Zylinder (10), Einführen des Zylinders (10) in den mittleren Teil des Körpers (9) und der Basis (8) und Verschweißen des kreisförmigen Rands (11) des Zylinders (10) mit der Außenfläche (82) der Basis (8) besteht.
